# EUROPEAN PATENT APPLICATION

(11) **EP 1 187 469 A2**
(43) Date of publication of application: **13.03.2002**
(21) Application number: 01120971.5
(22) Date of filing: 31.08.2001
(51) Int. Cl.: H04N 5/445

(54) **Television system**

(30) Priority: 02.09.2000 GB 0021549
(71) Applicant: Pace Micro Technology PLC, Saltaire, Shipley, BD14 3LF (GB)
(72) Inventor: Moir, Mark, Cambridge, Cambridgeshire CB5 9QF (GB)
(74) Representative: Wood, Graham

(57) **Abstract**

A television system (2) and method of using the same is provided. The television system (2) includes a display screen (6) and a broadcast data receiver (BDR) (4) for receiving data from a broadcaster and generating audio, visual and/or auxiliary data therefrom. At least part of the data relates to television programme and/or channel information. The television system (2) is provided with a search facility, typically in the BDR (4), to search and analyse the programme and/or channel information, relating to a programme and/or channel which is selected for viewing by a user, for pre-determined criteria. The system generates an indication, which in one form can be in the form of a warning, if the pre-determined criteria are detected in the programme and/or channel information.

## Description

This invention relates to a television system, and particularly to a television system incorporating an Electronic Programme Guide.

A television system hereinafter described includes a broadcaster for transmitting digital data via terrestrial, cable or digital means, which is received by a broadcast data receiver (called a set top box). The digital data results in a large number of channels and programs available for selection by a user. Conventional listing means for the large number of channels and programs are inadequate and this has resulted in the development of Electronic Programme Guides (EPGs).

Conventionally, when a program is broadcast which contains material of an adult nature, such as bad language, violence, nudity and/or the like, a verbal warning is typically given by the television presenter/announcer before the programme begins. However, if a user tunes into a programme once the programme has started, the user will miss the warning regarding the subject matter of the programme. This may result in distress to the user when they are exposed to the material of an adult nature, which is undesirable. This is particularly undesirable if the user is a child.

Television systems are available which allow a user to set a PIN number which blocks certain programmes and/or channels until the PIN number is entered. However, this PIN number is of no use with channels, such as BBC1, which show a wide range of programming. These channels show programmes which are normally suitable for family viewing but on certain occasions broadcast films or documentaries which are unsuitable for family viewing and which may issue a verbal warning before the programme begins. It is not practical for a PIN number to be used on all available channels as every time a user switched channels or watches a programme, the user would have to input a PIN number.

It is therefore an object of the present invention to overcome the abovementioned problems.

According to a first aspect of the present invention there is provided a television system including a display screen and a broadcast data receiver (BDR) for receiving data from a broadcaster and generating audio, visual and/or auxiliary data therefrom, at least part of said data relating to television programme and/or channel information, characterised in that said television system is provided with means to search and/or analyse the programme and/or channel information relating to a programme and/or channel which is selected for viewing by a user, for pre-determined criteria, and said system generating an indication of the pre-determined criteria being detected in the programme and/or channel information.

Typically the programme information referred to is that which is transmitted and used to generate an EPG display.

Preferably the BDR is provided with a search facility to search and analyse the information for the pre-determined criteria.

Preferably the indication, which can be in the form of a warning, is displayed on the display screen. Alternatively, or in addition to, the warning can be displayed on a display means on the remote control.

In one embodiment the indication can be an audible indication. The signal can be repeated at pre-set time intervals during the broadcast of a particular programme.

In one embodiment the indication is displayed according to predetermined criteria, such as key words and/or codes determined by the broadcaster, or a pre-determined portion of data or message transmitted, which is then processed and identified by the receiver.

In a further embodiment the user can select the pre-determined criteria by selecting a number of key words or topics from a drop down menu on the display screen, typically on the EPG display, for which an indication is to be issued if the words or topics are found in the programme information of the EPG. For example, an indication can be issued to show that a programme or channel contains adult material. Alternatively, a warning indication can be issued to show that a programme is unsuitable for young children.

In one embodiment the receiver includes the indication display stored in memory and the same is generated on screen in conjunction with the relevant programme when the pre-determined criteria are identified.

According to a second aspect of the present invention there is provided a method of using a television system, said television system including a display screen and a broadcast data receiver (BDR) for receiving data from a broadcaster and generating audio, visual and/or auxiliary data therefrom, at least part of said data relating to television programme and/or channel information, characterised in that said method includes the steps of searching and analysing programme and/or channel information relating to a programme and/or channel which is selected for viewing by a user for pre-determined criteria and, on identification of said pre-determined criteria in the programme and/or channel information, generating a visual indication for display on said display screen and/or audio indication for listening via speakers.

An embodiment of the invention will now be described with reference to the accompanying Figure.

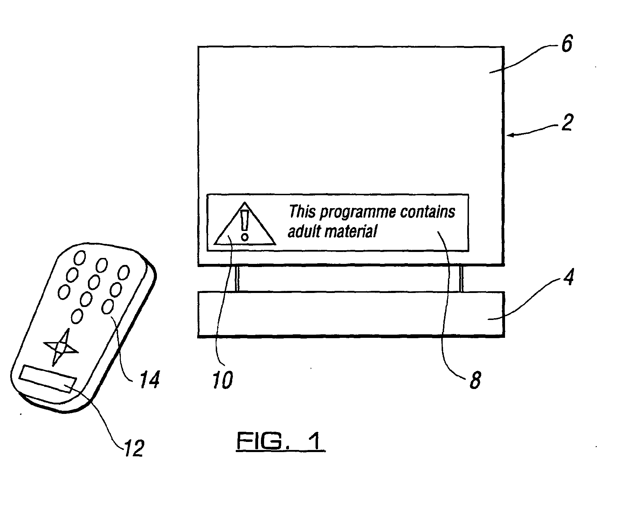

Figure 1 shows a display screen according to the present invention.

Referring to Figure 1 there is illustrated a display screen 6 and a broadcast data receiver (BDR) 4 of a television system 2.

The BDR 4 is provided with a search facility for searching and analysing programme and/or channel information for pre-determined criteria, such as keywords. The programme and/or channel information searched includes the data used to generate an EPG display. The BDR 4 is provided with memory in which the pre-determined criteria are stored and the BDR searches programme and/or channel information relating to the channel currently being watched by the user of the system.

If certain key words are found in the programme and/or channel information of the programme/channel currently being watched, then a warning is displayed on the display screen 6 in a window 8. For example, a warning symbol 10 is provided in addition to a written warning message indicating to the viewer that the programme contains material of adult nature. However, the warning symbol or message can be provided alone if required.

The warning can be displayed on the screen for the length of a particular programme or for pre-set time intervals. A warning can also be provided on display means 12 of a remote control 14 used to control one or more functions of the television system 2.

A verbal warning can be given in addition, to or as an alternative to, the written warning and the verbal warning can be repeated at pre-set time intervals throughout the programme.

The position of the warning on the screen can be defined by the broadcaster or can be user-defined.

The material which results in activation of a warning message can be pre-defined by the broadcaster. Alternatively, an electronic programme guide (EPG) can be provided with a drop down menu containing keywords which a user can select to be searched in the programme and/or channel information and, if contained therein, for a warning to be displayed on the display screen. For example, a user may select to have a warning displayed if any material of an adult nature is shown in a particular programme, such as nudity, violence, bad language and/or the like. Alternatively, an adult may select to have a warning displayed if material in a programme is unsuitable for children of a certain age, such as parental Guidance (PG), not suitable for children younger than 15 years old (15) or similar. Appropriate warning messages can be displayed depending on the key words, codes or other indication means searched in the EPG.

The option of having a warning displayed on a display screen can be switched on and off as required.

A user can input certain keywords and/or subject matter topics into the BDR via a query box on the display screen using the remote control handset 14, which they want the BDR to search for.

Thus it can be seen that the present invention provides a means of providing an indication to viewers of user-selected or predefined material without requiring the user to enter a PIN number. Once the indication is displayed it gives the user the option of continuing to watch the programme, to change channels or to switch off the television.

## Claims

1. A television system (2) including a display screen (6) and a broadcast data receiver (BDR) (4) for receiving data from a broadcaster and generating audio, visual and/or auxiliary data therefrom, at least part of said data relating to television programme and/or channel information, **characterised in that** said television system (2) is provided with means to search and/or analyse the programme and/or channel information relating to a programme and/or channel which is selected for viewing by a user, for pre-determined criteria, and said system (2) generating an indication of pre-determined criteria being detected in the programme and/or channel information.

2. A television system according to claim 1 **characterised in that** the programme and/or channel information analysed is or includes the data transmitted to the BDR (4) for use in generating an EPG display.

3. A television system according to claim 1 **characterised in that** a search facility is provided in the BDR (4) to search and analyse the programme and/or channel information for pre-determined criteria.

4. A television system according to claim 1 **characterised in that** the indication (10) generated is displayed on the display screen (6).

5. A television system according to claim 1 **characterised in that** the indication generated is displayed on a display (12) of a remote control (14) for use with the system.

6. A television system according to claim 1 **characterised in that** the warning generated is an audible signal.

7. A television system according to claim 1 **characterised in that** the indication is repeated at pre-set time intervals during the time for which the programme and/or channel are being shown.

8. A television system according to claim 1 **characterised in that** the pre-determined criteria include any or any combination of key words and/or codes determined by the broadcaster and/or user or a pre-determined transmitted message and/or signal which is received, processed and identified by the BDR (4).

9. A television system according to claim 1 **characterised in that** user can select the pre-determined criteria by the selection of a number of key words or topics provided in a drop down menu on the display screen (6).

10. A television system according to claim 9 **characterised in that** the selection of pre-determined criteria is made using the EPG display.

11. A television system according to claim 1 **characterised in that** the user defines the pre-determined criteria by inputting one or more key words or subject matter topics into the BDR (4) via a query box on the display screen (6) using control means.

12. A television system according to claim 1 **characterised in that** the indication display is stored in the memory provided in or connected to the BDR (4) and displayed on said display screen (6) when the pre-determined criteria are identified.

13. A television system according to claim 1 **characterised in that** the facility for displaying the indication can be switched on or off by the user as and when required.

14. A television system according to claim 1 **characterised in that** the indication is a warning message and/or warning signal.

15. A method of using a television system (2), said television system (2) including a display screen (6) and a broadcast data receiver (BDR) (4) for receiving data from a broadcaster and generating audio, visual and/or auxiliary data therefrom, at least part of said data relating to television programme and/or channel information, **characterised in that** said method includes the steps of searching and analysing programme and/or channel information relating to a programme and/or channel which is selected for viewing by a user for pre-determined criteria and, on identification of said pre-determined criteria in the programme and/or channel information, generating a visual indication for display on a display screen and/or audio indication for listening via speakers.
